# EUROPÄISCHE PATENTSCHRIFT

(11) **EP 0 930 208 B1**
(45) Veröffentlichungstag und Bekanntmachung des Hinweises auf die Patenterteilung: **21.02.2007**
(21) Anmeldenummer: 99107537.5
(22) Anmeldetag: 19.12.1995
(51) Int. Cl.: B60T 8/48, B60T 8/24, B60T 11/26

(54) **Hydraulische Kraftfahrzeugbremsanlage**
Hydraulic braking system for motor vehicles
Système hydraulique de freinage pou véhicules à moteur

(30) Priorität: 24.12.1994 DE 4446525
(43) Veröffentlichungstag der Anmeldung: 21.07.1999
(62) Teilanmeldung aus: 95942701.4
(73) Patentinhaber: Continental Teves AG & Co. oHG, 60488 Frankfurt (DE)
(72) Erfinder: Burgdorf, Jochen, 63075 Offenbach (DE); Dinkel, Dieter, 65817 Eppstein/Ts (DE); Hinz, Axel, 61267 Neu-Anspach (DE); Steffes, Helmut, 65795 Hattersheim (DE); Volz, Peter, 64291 Darmstadt (DE)
(74) Vertreter: Graf, Ulrich

(56) Entgegenhaltungen:
- EP-A- 0 072 745
- WO-A-91/16221
- WO-A-92/17357
- DE-A- 3 502 473
- DE-A- 4 213 740
- DE-A- 4 309 470
- DE-C- 4 232 311
- DE-C- 4 329 139
- FR-A- 2 636 905
- GB-A- 2 147 963
- GB-A- 2 196 709
- GB-A- 2 259 122

## Beschreibung

Die Erfindung betrifft eine hydraulische Kraftfahrzeugbremsanlage zur Fahrstabilitätsregelung und/oder Antriebsschlupfregelung mit einem nach dem Rückförderprinzip arbeitenden Blockierschutzsystem (ABS), einem von einem Bremspedal betätigbaren Bremsdruckgeber, der aus einem Bremskraftverstärker und einem dem Bremskraftverstärker nachgeschalteten, mit einem Druckmittelvorratsbehälter in Verbindung stehenden zweikreisigen Hauptbremszylinder besteht, sowie mit weiteren, im Oberbegriff des Anspruchs genannten, gattungsbestimmenden Merkmalen.

Eine derartige hydraulische Kraftfahrzeugbremsanlage ist z.B. aus der DE-PS 43 29 139 bekannt, bei der als Bremsdruck-Steuergerät ein als Tandem-Hauptzylinder ausgebildeter statischer Hauptzylinder mit den Bremskreisen einzeln zugeordneten Druckausgängen vorgesehen ist. Die Fahrstabilitätsregeleinrichtung arbeitet nach dem Prinzip, durch elektronisch gesteuerte, selbsttätige Aktivierung einer oder mehrerer Radbremsen den Längs- und den Seitenschlupf der Fahrzeugräder innerhalb mit dynamischer Stabilität des Fahrzeuges insgesamt verträglicher Grenzen zu halten. Als Druckquelle, aus der im Fall eines Fahrstabilitätsregelbetriebes die für die Regelung eingesetzten Radbremsen mit Bremsdruck beaufschlagbar sind, werden die Rückförderpumpen des Blockierschutzsystems ausgenutzt, die eingangsseitig mit dem Ausgangsdruck einer auf relativ niedrigem Ausgangsdruckniveau arbeitenden, vorzugsweise elektrisch angetriebenen Vorladepumpe beaufschlagbar sind.

Zur hydraulischen Trennung der beiden Bremskreise sind diesen einzeln zugeordnete Vorladezylinder vorgesehen, die je einen Kolben aufweisen, der einen Ausgangsdruckraum, der über ein elektrisch ansteuerbares Vorlade-Steuerventil mit der Saugseite der Rückförderpumpe des jeweiligen Bremskreises verbindbar ist, gegen einen Antriebsdruckraum, an den der Druckausgang der Vorladepumpe angeschlossen ist, druckdicht abgrenzt und zwei in axialem Abstand voneinander angeordnete Flansche hat, zwischen denen sich ein mit je einem der Druckausgänge des Bremsgerätes in ständig kommunizierender Verbindung gehaltener Nachlaufraum erstreckt, wobei der Kolben des jeweiligen Vorladezylinders mit einem mechanisch betätigbaren Ventil versehen ist, das auch die Funktion eines Rückschlagventils erfüllt, das einen den Nachlaufraum mit dem Ausgangsdruckraum verbindenden Durchflußkanal des Kolbens sperrt, solange der Druck im Ausgangsdruckraum des jeweiligen Vorladezylinders größer ist als in dem Nachlaufraum und diesen Durchflußkanal freigibt, wenn der in dem Nachlaufraum herrschende Hauptbremszylinder-Ausgangsdruck größer ist als der Druck im Ausgangsdruckraum des Vorladezylinders. Zwischen den Druckausgang des jeweiligen Vorladezylinders und die Hauptbremsleitung des über diesen druckversorgten Bremskreises ist jeweils ein elektrisch ansteuerbares Umschaltventil geschaltet, das stromlos offen und im erregten Zustand, der dem Fahrstabilitätsregelbetrieb zugeordnet ist, geschlossen ist. Die Saugseiten der beiden Rückförderpumpen sind an die Hauptbremsleitung des jeweiligen Bremskreises über je ein Rückschlagventil angeschlossen, das durch relativ höheren Druck in der Rücklaufleitung des jeweiligen Bremskreises als an der Saugseite seiner Rückförderpumpe in Öffnungsrichtung beaufschlagt und sonst sperrend ist. Die beiden Vorladezylinder haben einen gemeinsamen, an den Druckausgang der Vorladepumpe angeschlossenen Antriebsdruckraum, der durch Ansteuerung eines stromlos offenen Magnetventils von dem Druckmittelvorratsbehälter der Bremsanlage trennbar ist.

Als nachteilig ist bei der vorbekannten Bremsanlage der erhebliche technische Aufwand und der erforderlich Raumbedarf anzusehen, der mit den beiden Vorladezylindern verknüpft ist. Außerdem ist die vorbekannte Bremsanlage, verglichen mit einem Fahrzeug, das mit einem Blockierschutzsowie einem Antriebsschlupfregelsystem ausgerüstet ist, das eine selbsttätige Aktivierung lediglich der Radbremsen der angetriebenen Fahrzeugräder ermöglicht, wesentlich komplizierter aufgebaut und auch entsprechend teurer. Es kommt hinzu, daß bei einer solchen Bremsanlage wegen der zusätzlichen Vorladezylinder auch zusätzliche hydraulische Kammern vorhanden sind, aus denen Gasblasen, die sich bei starker thermischer Belastung der Radbremsen bilden können, nur schwer entweichen können, was insbesondere dann gilt, wenn die beiden Vorladezylinder zu einer symmetrischen Baueinheit zusammengefaßt sind und daher die für eine einigermaßen gute Enlüftbarkeit beider Vorladezylinder günstigste Anordnung derselben allenfalls im Sinne eines bestmöglichen Kompromisses getroffen werden kann.

Eine Anlage gemäß dem Oberbegriff des Anspruchs 1 geht aus GB-A-2 259 122 hervor, wobei ein Vordruckerzeuger innerhalb des Druckmittelbehälters vorgesehen ist, der über den Vakuumanschluß von einer Vakuumquelle betätigt wird.

Es ist daher Aufgabe der vorliegenden Erfindung, eine hydraulische Kraftfahrzeugbremsanlage der eingangs genannten Gattung dahingehend zu verbessern, daß eine Reduzierung des Kosten- als auch des Bauraumaufwands bei gleichzeitiger Erhöhung deren Funktionszuverlässigkeit erreicht werden kann.

Eine erfindungsgemäße Lösung der gestellten Aufgabe besteht darin, daß die Hilfsdruckquelle, deren Druckmittelstrom wahlweise den Radbremsen oder der Saugseite der Rückförderpumpe zuführbar ist, wirkungsmäßig zwischen dem Druckmittelvorratsbehälter und dem Hauptbremszylinder geschaltet ist. Die Hilfsdruckquelle ist als elektrisch oder hydraulische antreibbare Vorladepumpe ausgebildet, die zwischen dem Hauptbremszylinder-Druckraum und dem diesem Druckraum zugeordneten Druckmittelraum des Druckmittelvorratsbehälters angeordnet ist. Der von der Vorladepumpe gelieferte Vorladedruck ist dabei vorzugsweise so hoch, daß durch seine Wirkung gleichzeitig im zweiten Hauptbremzylinder-Druckraum ein Druckaufbau stattfindet. Dadurch wird erreicht, daß in den zweiten Hauptbremszylinder-Druckraum nur das Druckmittelvolumen eingespeist wird, das dem Hub des den zweiten Hauptbremszylinder-Druckraum begrenzenden Kolben entspricht, so daß ein besseres Pedalgefühl erreicht wird.

Eine Energieeinsparung bei gleichzeitiger Geräuschreduzierung wird bei einer anderen Weiterbildung der Erfindung dadurch erreicht, daß der von der Vorladepumpe gelieferte Vorladedruck so hoch ist, daß im zweiten Bremszylinder-Druckraum kein Druckaufbau stattfindet. Ein solches System kann angewendet werden, wenn im Fahrzeug nur eine Achse mit hoher Systemdynamik erforderlich ist.

Um beide Bremskreise gleichzeitig mit dem Vorladedruck beaufschlagen zu können, ist sowohl dem ersten als auch dem zweiten Hauptbremszylinder-Druckraum eine einkreisige Vorladepumpe zugeordnet. Eine andere Möglichkeit besteht darin, daß die Vorladepumpe zweikreisig ausgebildet ist, so daß beide Hauptbremszylinder-Druckräume mit dem Vorladedruck beaufschlagbar sind. Dabei muß sichergestellt sein, daß, wenn die Vorladepumpen nicht eingeschaltet sind, ein ausreichender Volumenaustausch zwischen dem Druckmittelvorratsbehälter und dem Hauptbremszylinder gewährleistet ist. Dies ist insbesondere leicht bei Vorladepumpen mit einem ausreichenden Schlupf zu realisieren.

Die Vorladepumpe, die vorzugsweise als eine Kreisel-, Flügelzellen-, Zahnrad- oder Kolbenpumpe ausgebildet sein kann, wird von einem Elektromotor, von einem mit einem pneumatischen Differenzdruck arbeitenden Antriebszylinder oder hydraulisch angetrieben.

Es zeigen:
- Fig. 1: eine Ausführung einer blockiergeschützten Kraftfahrzeugbremsanlage nach der Erfindung;
- Fig. 2: eine Ausführung einer Vorladeeinrichtung für erfindungsgemäße Kraftfahrzeugbrensanlagen.

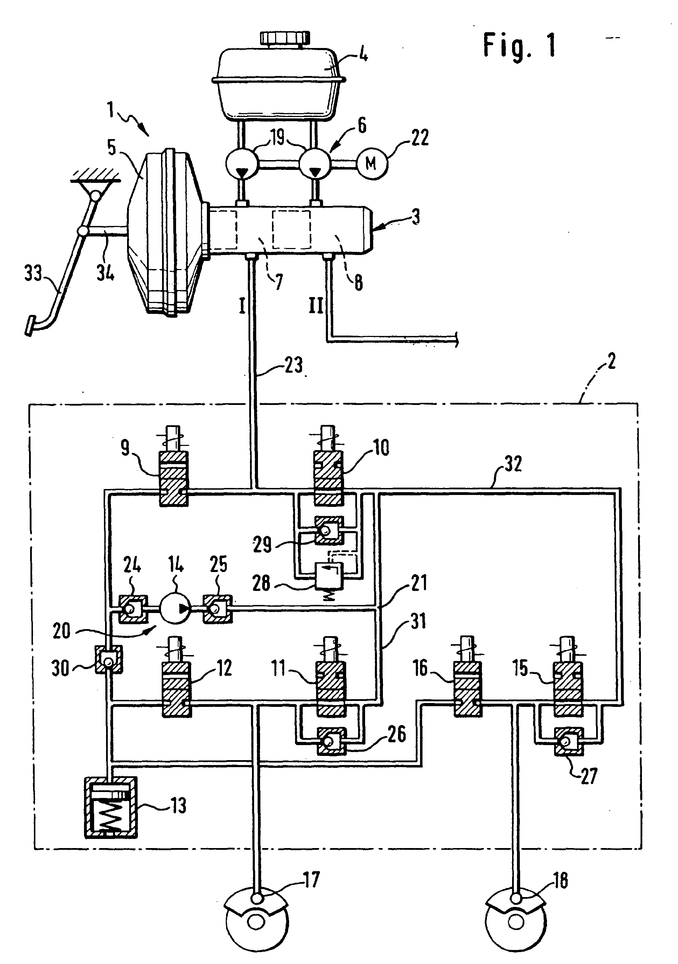

Die im Figur 1 dargestellte erste Ausführung der erfindungsgemäßen Bremsanlage weist zwei Bremskreise I und II auf, deren Aufbau völlig identisch ist, so daß die folgende Beschreibung eines Bremskreises ebenso auf den anderen zutrifft. Die gezeigte Bremsanlage besteht im wesentlichen aus einem Bremsdruckgeber 1, an den über nicht näher bezeichnete hydraulische Leitungen Radbremszylinder 17,18 anschließbar sind, einem zwischen dem Bremsdruckgeber 1 und den Radbremsen geschalteten Hydroaggregat 2, sowie einem nicht gezeigten elektronischen Regler mit zugehöriger Sensorik. Die Zuordnung der Radbremszylinder 17,18 den einzelnen Bremskreisen I, II ist derart getroffen, daß der erste Radbremszylinder 17 entweder einem Rad einer Fahrzeugachse und der andere Radbremszylinder 18 dem diagonal gegenüberliegenden Rad der anderen Fahrzeugachse zugeordnet ist (diagonale Aufteilung der Bremskreise) oder aber beide Radbremszylinder 17 und 18 derselben Fahrzeugachse, wie gezeigt, zugoerdnet sind (Schwarzweiß-Aufteilung der Bremskreise).

Der vom Fahrer des Kraftfahrzeugs mittels eines Bremspedals 33 betätigbare Druckgeber 1 besteht aus einem pneumatischen Bremskraftverstärker 5, dem ein Hauptbremszylinder, vorzugsweise ein Tandemhauptzylinder 3 nachgeschaltet ist, dessen Druckräume 7,8 mit einem Druckmittelvorratsbehälter 4 verbindbar sind. An das Bremspedal 33 ist eine Betätigungsstange 34 angekoppelt, die eine Betätigung eines nicht dargestellten Steuerventils durch den Fahrzeugfahrer ermöglicht, das den Aufbau eines pneumatischen Differenzdruckes im Gehäuse des Unterdruckbremskraftverstärkers 5 steuert.

Das Hydroaggregat 2 weist ein Motor-Pumpen-Aggregat 20 auf, das aus einer durch einen nicht gezeigten Elektromotor angetriebenen hydraulischen Rückförderpumpe 14 besteht, deren Saugseite über ein erstes Rückschlagventil 24 sowie ein elektromagnetisch betätigbares Schaltventil 9 an den ersten Druckraum 7 des Hauptbremszylinders 3 angeschlossen ist. Von der Druckseite der Rückförderpumpe 14 strömt das Druckmittel über ein zweites Rückschlagventil 25 und eine nicht gezeigte Dämpfungskammer zu einem hydraulischen Knotenpunkt 21. An diesen angeschlossen ist sowohl ein zum ersten Radbremszylinder 17 führender Leitungsabschnitt 31 als auch ein zum zweiten Radbremszylinder 18 führenden Leitungsabschnitt 32. Eine hydraulische Leitung 23 verbindet die Druckseite der Rückförderpumpe 14 mit dem Tandemhauptzylinder 3. Außerdem ist zwischen dem Knotenpunkt 21 und dem Hauptbremszylinder 3 ein vorzugsweise elektromagnetisch betätigbares Trennventil 10 geschaltet, dem sowohl ein drittes Rückschlagventil 29 als auch ein Druckbegrenzungsventil 28 parallelgeschaltet sind. Zur Modulation des im ersten Radbremszylinder 17 eingesteuerten Drucks dienen eine Parallelschaltung eines Einlaß- (11) mit einem vierten Rückschlagventil 26 sowie ein Auslaßventil 12, wobei die erwähnte Parallelschaltung im Leitungsabschnitt 31 eingefügt ist und das Auslaßventil 12 zum Zwecke eines Radbremsdruckabbaus eine Verbindung zwischen dem ersten Radbremszylinder 17 und einem Niederdruckspeicher 13 ermöglicht, der über ein fünftes Rückschlagventil 30 mit der Saugseite der Rückförderpumpe 14 verbunden ist.

Um in dem zum betrachteten Bremskreis gehörenden zweiten Radbremszylinder 18 analog zum bereits betrachteten Radbremszylinder 17 den darin eingesteuerten hydraulischen Druck regulieren zu können, sind eine zweite Parallelschaltung eines zweiten Einlaß- (15) mit einem sechsten Rückschlagventil 27 sowie ein zweites Auslaßventil 16 vorgesehen, wobei die erwähnte Parallelschaltung im Leitungsabschnitt 32 eingefügt ist und das Auslaßventil 16 zum Zwecke eines Radbremsdruckabbaus eine Verbindung zwischen dem zweiten Radbremszylinder 18 und dem Niederdruckspeicher 13 herstellt.

Um im Bedarfsfall, beispielsweise bei sehr niedrigen Temperaturen, der Rückförderpumpe 14 das Druckmittel unter einem höheren Druck zur Verfügung zu stellen, bzw. ein Vorfüllen der Radbremsen 17,18 zu erreichen, ist eine Hilfsdruckquelle 6 vorgesehen, die wirkungsmäßig zwischen dem Druckmittelvorratsbehälter 4 und dem Hauptbremszylinder 3 angeordnet ist. Die Hilfsdruckquelle ist bei dem gezeigten Ausführungsbeispiel durch eine durch einen Elektromotor 22 angetriebene, zweikreisige Vorladepumpe 19 gebildet, deren Saugseite mit dem Druckmittelvorratsbehälter 4 in Verbindung steht und deren Druckseite an die Hauptbremszylinder - Druckräume 7,8 angeschlossen ist. Die Vorladepumpe 19 erzeugt einen Druckmittelstrom, der über die Hauptbremszylinderausgänge, je nach der Schaltstellung der Ventile 9,10, entweder der Saugseite der Rückförderpumpe 14 oder direkt den Radbremsen 17,18 zugeführt wird.

Denkbar ist auch eine Variante, bei der lediglich eine einkreisige Vorladepumpe vorgesehen ist, die an den ersten Hauptbremszylinder - Druckraum 7 angeschlossen ist. Bei dieser Variante muß der von der Vorladepumpe gelieferte Vorladedruck so hoch sein, daß er den den zweiten Druckraum 8 begrenzenden Hauptbremszylinderkolben gegen den Widerstand einer ihn entgegen der Betätigungsrichtung vorspannenden Rückstellfeder verschieben kann, um auch im zweiten Bremskreis II einen Vorladedruck zu erzeugen. Diese Anordnung hat unter anderem den Vorteil, daß in den zweiten Druckraum 8 nur das Druckmittelvolumen eingespeist wird, welches dem Hub des den zweiten Druckraum 8 begrenzenden Kolbens entspricht. Dies hat ein besseres bzw. angenehmeres Pedalgefühl zur Folge.

Wenn im Fahrzeug nur eine Achse mit hoher Systemdynamik erforderlich ist, kann die erwähnte einkreisige Vorladepumpe so ausgelegt werden, daß der von ihr aufgebrachte Druck gerade so hoch ist, daß keine Verschiebung des Sekundärkolbens und demnach kein Vorladedruckaufbau im zweiten Bremskreis stattfindet.

Die Vorladepumpen können als Kreisel-, Flügelzellen-, Zahnrad- oder Kolbenpumpen ausgeführt und im Druckmittelvorratsbehälter 4, im Hauptbremszylinder 3 oder zwischen Druckmittelvorratsbehälter 4 und Hauptbremszylinder 3 angeordnet sein. Als Antriebe kommen außer dem bereits erwähnten Elektromotor 22 noch sowohl hydraulische als auch pneumatische Antriebszylinder in Frage.

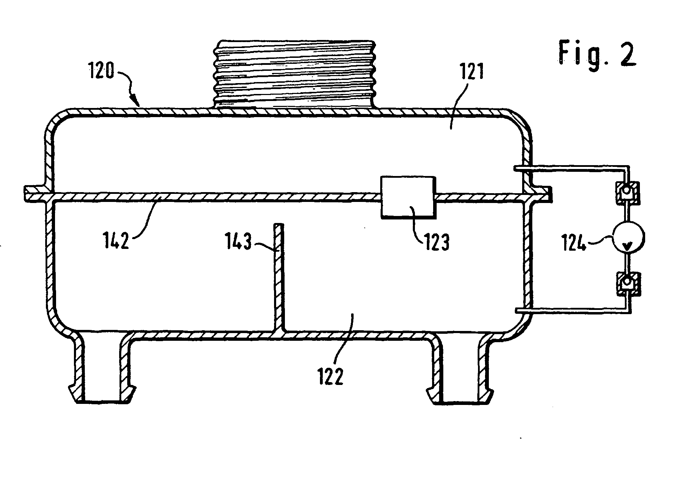

Fig. 2 zeigt eine Anordnung, bei der der Vorladedruck über den Druckmittelvorratsbehälter 120 zur Verfügung gestellt wird. Zu diesem Zweck wird im Druckmittelvorratsbehälter 120 ein Druckschott 142 eingezogen, der das Behältervolumen in zwei voneinander getrennte hydraulische Räume 121,122 unterteilt. Im Druckschott 142 befindet sich eine Ventileinrichtung 123, die im Ruhezustand und während der Normalbremsung die Räume 121, 122 zum Druckausgleich verbindet. An den ersten (Vorrats-) Raum 121 ist die Saugseite einer Vorladepumpe 124 angeschlossen, deren Druckseite an den zweiten (Vorlade-) Raum 122 angeschlossen ist. Die Ventileinrichtung 123, die während eines Vorladevorgangs die beiden Räume 121,122 voneinander trennen muß, kann dabei als ein zum Vorratsraum 121 hin schließendes Rückschlagventil, als ein stromlos offenes Magnetventil oder als ein durch den Vorladedruck steuerbares, hydraulisch betätigbares Ventil ausgebildet sein.

Dabei ergeben sich zwei Grundvarianten, die von der geforderten Systemdynamik des Fahrzeugs abhängen:

Bei der ersten Variante erfolgt die Vorladung nur in einem Bremskreis (Schwarz-Weiß-Aufteilung der Bremskreise). Hierbei wird eine den unteren (Vorlade-) Raum 122 teilende Trennwand 143 am Dichtschott 142 dicht angebunden, so daß der Volumenstrom der Vorladepumpe 124 nur in die in der Zeichnung rechts gezeigte Kammer geleitet wird.

Bei der zweiten Variante erfolgt die Vorladung in beiden Bremskreisen (Schwarz-Weiß-und/oder Diagonalaufteilung der Bremskreise). Die Trennwand 142 ist nur so hoch, wie es die gesetzlichen Vorschriften für die Behälterauslegung fordern.

Nicht dargestellt ist die Behälterwarneinrichtung, deren Anschlüsse zu einem sowohl für die Vorladepumpe 124 als auch das Magnetventil 123 vorgesehenen, nicht gezeigten Zentralstecker geführt werden.

## Patentansprüche

1. Hydraulische Kraftfahrzeugbremsanlage zur Fahrstabilitäts- und/ oder Antriebsschlupfregelung, mit einem nach dem Rückförderprinzip arbeitenden Blockierschutzsystem (ABS), einem von einem Bremspedal betätigbaren Bremsdruckgeber, der aus einem Bremskraftverstärker sowie einem dem Bremskraftverstärker nachgeschalteten, mit einem Druckmittelvorratsbehälter in Verbindung stehenden zweikreisigen Hauptbremszylinder besteht, an dessen Druckräume über ein eine Rückförderpumpe aufweisendes Hydroaggregat den einzelnen Fahrzeugrädern zugeordnete Radbremsen angeschlossen sind, sowie mit einer Hilfsdruckquelle, deren Druckmittelstrom wahlweise den Radbremsen oder der Saugseite der Rückförderpumpe zuführbar ist, wobei die Hilfsdruckquelle (6) wirkungsmäßig zwischen dem Druckmittelvorratsbehälter (4) und dem Hauptbremszylinder (3) geschaltet ist **dadurch gekennzeichnet, dass** die Hilfsdruckquelle (6) außerhalb des Druckmittelvorratsbehälters (4, 120)angeordnet ist, und dass die Hilfsdruckquelle (6) als elektrisch oder hydraulisch antreibbare Vorladepumpe ausgebildet ist.

2. Hydraulische Kraftfahrzeugbremsanlage nach Anspruch 1, wobei die Hilfsdruckquelle als eine Vorladepumpe ausgebildet ist, **dadurch gekennzeichnet, daß** die Vorladepumpe einkreisig ausgebildet und zwischen dem ersten Hauptbremszylinder-Druckraum und dem diesem Druckraum zugeordneten Druckmittelraum des Druckmittelvorratsbehälters angeordnet ist.

3. Hydraulische Kraftfahrzeugbremsanlage nach Anspruch 2 **dadurch gekennzeichnet, daß** der von der Vorladepumpe gelieferte Vorladedruck so hoch ist, daß durch seine Wirkung gleichzeitig im zweiten Hauptbremszylinder-Druckraum ein Druckaufbau stattfindet.

4. Hydraulische Kraftfahrzeugbremsanlage nach Anspruch 2 **dadurch gekennzeichnet, daß** der von der Vorladepumpe gelieferte Vorladedruck so hoch ist, daß im zweiten Hauptbremszylinder-Druckraum kein Druckaufbau stattfindet.

5. Hydraulische Kraftfahrzeugbremsanlage nach Anspruch 1 **dadurch gekennzeichnet, daß** sowohl dem ersten als auch dem zweiten Hauptbremszylinder-Druckraum eine einkreisige Vorladepumpe zugeordnet ist.

6. Hydraulische Kraftfahrzeugbremsanlage nach Anspruch 2 **dadurch gekennzeichnet, daß** die Vorladepumpe (10) zweikreisig ausgebildet ist, so daß beide Hauptbremszylinder-Druckräume (7,8) mit dem Vorladedruck beaufschlagbar sind.

7. Hydraulische Kraftfahrzeugbremsanlage nach Anspruch 2, 5 oder 6 **dadurch gekennzeichnet, daß** die Vorladepumpe (10) von einem Elektromotor (9) angetrieben wird.

8. Hydraulische Kraftfahrzeugbremsanlage nach Anspruch 2, 5 oder 6 **dadurch gekennzeichnet, daß** die Vorladepumpe von einem mit einem pneumatischen Differenzdruck arbeitenden Pneumatikzylinder angetrieben wird.

9. Hydraulische Kraftfahrzeugbremsanlage nach einem der vorhergehenden Ansprüche **dadurch gekennzeichnet, daß** die Vorladepumpe (10) als eine Kreisel-,Flügelzellen-, Zahnrad- oder Kolbenpumpe ausgebildet ist.

10. Hydraulische Kraftfahrzeugbremsanlage nach einem der vorhergehenden Ansprüche **dadurch gekennzeichnet,daß** die Vorladepumpe im Druckmittelvorratsbehälter angeordnet ist.

11. Hydraulische Kraftfahrzeugbremsanlage nach einem der Ansprüche 1 bis 9 **dadurch gekennzeichnet, daß** die Vorladepumpe im Hauptbremszylinder angeordnet ist.

12. Hydraulische Kraftfahrzeugbremsanlage nach einem der Ansprüche 1 bis 9 **dadurch gekennzeichnet, daß** die Vorladepumpe in hydraulischen Verbindungen zwischen Druckmittelvorratsbehälter und Hauptbremszylinder geschaltet ist.

13. Hydraulische Kraftfahrzeugbremsanlage nach Anspruch 1, **dadurch gekennzeichnet, daß** der Druckmittelvorratsbehälter (120) zwei voneinander getrennte, mittels einer Ventileinrichtung (123) miteinander verbindbare hydraulische Räume (121;122) aufweist, wobei an den ersten Raum (Vorratsraum (121)) die Saugseite und an den zweiten Raum (Vorladedruckraum (122)) die Druckseite der Vorladepumpe (124) angeschlossen ist, wobei der zweite Raum (Vorladedruckraum (122)) mit mindestens einem der Hauptbremszylinder-Druckräume in Verbindung steht.

14. Hydraulische Kraftfahrzeugbremsanlage nach Anspruch 13, **dadurch gekennzeichnet, daß** die Ventileinrichtung (123) als ein zum Vorratsraum (121) hin schließendes Rückschlagventil ausgebildet ist.

15. Hydraulische Kraftfahrzeugbremsanlage nach Anspruch 13, **dadurch gekennzeichnet, daß** die Ventileinrichtung (123) als ein stromlos offenes Magnetventil ausgebildet ist.

16. Hydraulische Kraftfahrzeugbremsanlage nach Anspruch 13, **dadurch gekennzeichnet, daß** die Ventileinrichtung (123) als ein hydraulisch betätigbares, durch den Vorladedruck steuerbares Ventil ausgebildet ist.

## Claims

1. Hydraulic automotive vehicle brake system for driving stability control and/or traction slip control, which includes an anti-lock system (ABS) operating according to the recirculation principle, a brake pressure generator operable by a brake pedal and being comprised of a brake force booster and a dual-circuit master brake cylinder that is connected downstream of the brake force booster and is in communication with a pressure fluid supply reservoir, wherein wheel brakes associated with the individual vehicle wheels are connected to the pressure chambers of master brake cylinder by way of a hydraulic unit having a return pump, and an auxiliary pressure source whose pressure fluid flow can be supplied selectively to the wheel brakes or the suction side of the return pump, and the auxiliary pressure source (6) is interposed between the pressure fluid supply reservoir (4) and the master brake cylinder (3) in terms of effect,
**characterized in that** the auxiliary pressure source (6) is arranged outside the pressure fluid supply reservoir (4, 120), and **in that** the auxiliary pressure source (6) is designed as an electrically or hydraulically drivable precharging pump.

2. Hydraulic automotive vehicle brake system as claimed in claim 1, wherein the auxiliary pressure source is designed as a precharging pump,
**characterized in that** the precharging pump has a single-circuit design and is interposed between the first master brake cylinder pressure chamber and the pressure fluid chamber of the pressure fluid supply reservoir associated with this pressure chamber.

3. Hydraulic automotive vehicle brake system as claimed in claim 2,
**characterized in that** the precharging pressure furnished by the precharging pump is so high that its effect simultaneously causes pressure build-up in the second master brake cylinder pressure chamber.

4. Hydraulic automotive vehicle brake system as claimed in claim 2,
**characterized in that** the precharging pressure furnished by the precharging pump is so high that pressure build-up does not take place in the second master brake cylinder pressure chamber.

5. Hydraulic automotive vehicle brake system as claimed in claim 1,
**characterized in that** a single-circuit precharging pump is associated with both the first and the second master brake cylinder pressure chamber.

6. Hydraulic automotive vehicle brake system as claimed in claim 2,
**characterized in that** the precharging pump (10) has a dual-circuit design so that precharging pressure can be applied to both master brake cylinder pressure chambers (7, 8).

7. Hydraulic automotive vehicle brake system as claimed in claims 2, 5 or 6,
**characterized in that** the precharging pump (10) is driven by an electric motor (9).

8. Hydraulic automotive vehicle brake system as claimed in claims 2, 5 or 6,
**characterized in that** the precharging pump is driven by a pneumatic cylinder that operates with a pneumatic differential pressure.

9. Hydraulic automotive vehicle brake system as claimed in any one of the preceding claims,
**characterized in that** the precharging pump (10) is configured as a centrifugal pump, a vane-type pump, a gear pump, or a piston pump.

10. Hydraulic automotive vehicle brake system as claimed in any one of the preceding claims,
**characterized in that** the precharging pump is arranged in the pressure fluid supply reservoir.

11. Hydraulic automotive vehicle brake system as claimed in any one of claims 1 to 9,
**characterized in that** the precharging pump is arranged in the master brake cylinder.

12. Hydraulic automotive vehicle brake system as claimed in any one of claims 1 to 9,
**characterized in that** the precharging pump is interposed in hydraulic connections between pressure fluid supply reservoir and master brake cylinder.

13. Hydraulic automotive vehicle brake system as claimed in claim 1,
**characterized in that** the pressure fluid supply reservoir (120) includes two hydraulic chambers (121; 122) which are separated from each other and can be interconnected by means of a valve assembly (123), with the suction side of the precharging pump (124) being connected to the first chamber (supply chamber (121), and the pressure side thereof being connected to the second chamber (precharging pressure chamber (122)), and the second chamber (precharging pressure chamber (122)) being in communication with at least one of the master brake cylinder pressure chambers.

14. Hydraulic automotive vehicle brake system as claimed in claim 13,
**characterized in that** the valve assembly (123) is designed as a non-return valve that closes towards the supply chamber (121).

15. Hydraulic automotive vehicle brake system as claimed in claim 13,
**characterized in that** the valve assembly (123) is configured as a normally open solenoid valve.

16. Hydraulic automotive vehicle brake system as claimed in claim 13,
**characterized in that** the valve assembly (123) is configured as a hydraulically operable valve controllable by the precharging pressure.

## Revendications

1. Système hydraulique de freinage de véhicule automobile pour la régulation de la stabilité et/ou du patinage à l'accélération, comportant un système antiblocage (ABS) fonctionnant suivant le principe du refoulement, un transmetteur de pression de freinage pouvant être actionné par une pédale de frein et qui est constitué d'un servofrein ainsi que d'un cylindre principal de frein à deux circuits monté en aval du servofrein et en liaison avec un réservoir de fluide sous pression, aux chambres sous pression du cylindre principal de frein étant raccordés, par un groupe hydraulique comportant une pompe de refoulement, des freins de roue associés aux différentes roues du véhicule, et comportant une source de pression auxiliaire dont le courant de fluide sous pression peut être amené au choix aux freins des roues ou au côté aspiration de la pompe de refoulement, la source de pression auxiliaire (6) étant couplée de manière active entre le réservoir de fluide sous pression (4) et le cylindre principal de frein (3), **caractérisé en ce que** la source de pression auxiliaire (6) est disposée à l'extérieur du réservoir de fluide sous pression (4, 120), et **en ce que** la source de pression auxiliaire (6) est conçue sous la forme d'une pompe de précharge pouvant être entraînée électriquement ou hydrauliquement.

2. Système hydraulique de freinage de véhicule automobile selon la revendication 1, dans lequel la source de pression auxiliaire est conçue sous la forme d'une pompe de précharge, **caractérisé en ce que** la pompe de précharge est réalisée à un circuit et est disposée entre la première chambre de pression du cylindre principal de frein et la chambre de fluide sous pression, associée à cette chambre sous pression, du réservoir de fluide sous pression.

3. Système hydraulique de freinage de véhicule automobile selon la revendication 2, **caractérisé en ce que** la pression de précharge, fournie par la pompe de précharge, est suffisamment élevée pour que, sous l'effet de son action, une montée en pression ait lieu simultanément dans la deuxième chambre sous pression du cylindre principal de frein.

4. Système hydraulique de freinage de véhicule automobile selon la revendication 2, **caractérisé en ce que** la pression de précharge fournie par la pompe de précharge est suffisamment élevée pour qu'aucune montée en pression n'ait lieu dans la deuxième chambre sous pression du cylindre principal de frein.

5. Système hydraulique de freinage de véhicule automobile selon la revendication 1, **caractérisé en ce qu'**une pompe de précharge à un circuit est associée à la première comme à la seconde chambre sous pression du cylindre principal de frein.

6. Système hydraulique de freinage de véhicule automobile selon la revendication 2, **caractérisé en ce que** la pompe de précharge (10) est réalisée à deux circuits ce qui fait que les deux chambres sous pression (7, 8) du cylindre principal de frein peuvent recevoir la pression de précharge.

7. Système hydraulique de freinage de véhicule automobile selon la revendication 2, 5 ou 6, **caractérisé en ce que** la pompe de précharge (10) est entraînée par un moteur électrique (9).

8. Système hydraulique de freinage de véhicule automobile selon la revendication 2, 5 ou 6, **caractérisé en ce que** la pompe de précharge est entraînée par un vérin pneumatique fonctionnant avec une pression différentielle pneumatique.

9. Système hydraulique de freinage de véhicule automobile selon l'une des revendications précédentes, **caractérisé en ce que** la pompe de précharge (10) est réalisée sous la forme d'une pompe circulaire, d'une pompe à chambre et à pales, d'une pompe à roue dentée ou d'une pompe à piston.

10. Système hydraulique de freinage de véhicule automobile selon l'une des revendications précédentes, **caractérisé en ce que** la pompe de précharge est disposée dans le réservoir de fluide sous pression.

11. Système hydraulique de freinage de véhicule automobile selon l'une des revendications 1 à 9, **caractérisé en ce que** la pompe de précharge est disposée dans le cylindre principal de frein.

12. Système hydraulique de freinage de véhicule automobile selon l'une des revendications 1 à 9, **caractérisé en ce que** la pompe de précharge est montée dans des liaisons hydrauliques entre le réservoir de fluide sous pression et le cylindre principal de frein.

13. Système hydraulique de freinage de véhicule automobile selon la revendication 1, **caractérisé en ce que** le réservoir de fluide sous pression (120) comporte deux chambres hydrauliques (121 ; 122) séparées l'une de l'autre, pouvant être reliées l'une à l'autre au moyen d'un dispositif à soupape (123), à la première chambre (chambre de réserve (121)) étant raccordé le côté aspiration et à la seconde chambre (chambre de pression de précharge (122)) étant raccordé le côté refoulement de la pompe de précharge (124), la seconde chambre (chambre de pression de précharge (122)) étant en liaison avec au moins l'une des chambres sous pression du cylindre principal de frein.

14. Système hydraulique de freinage de véhicule automobile selon la revendication 13, **caractérisé en ce que** le dispositif à soupape (123) est réalisé sous la forme d'un clapet de non-retour se fermant vers la chambre de réserve (121).

15. Système hydraulique de freinage de véhicule automobile selon la revendication 13, **caractérisé en ce que** le dispositif à soupape (123) est réalisé sous la forme d'une soupape magnétique ouverte lorsqu'elle n'est pas parcourue par un courant.

16. Système hydraulique de freinage de véhicule automobile selon la revendication 13, **caractérisé en ce que** le dispositif à soupape (123) est réalisé sous la forme d'une soupape pouvant être actionnée hydrauliquement, commandée par la pression de précharge.
